# EUROPÄISCHE PATENTSCHRIFT

(11) **EP 2 655 177 B1**
(45) Veröffentlichungstag und Bekanntmachung des Hinweises auf die Patenterteilung: **22.09.2021**
(21) Anmeldenummer: 11779344.8
(22) Anmeldetag: 28.10.2011
(51) Int. Cl.: B62D 65/12

(54) **VERFAHREN ZUM MONTIEREN VON AUFHÄNGUNG VON KRAFTWAGEN**
ASSEMBLY PROCESS OF A SUSPENSION OF A VEHICLE
PROCÉDÉ D'ASSEMBLAGE D'UNE SUSPENSION DE VÉHICULE

(30) Priorität: 23.12.2010 DE 102010055959
(43) Veröffentlichungstag der Anmeldung: 30.10.2013
(73) Patentinhaber: Daimler AG, 70372 Stuttgart (DE)
(72) Erfinder: GREVENER, Christoph, 75391 Gechingen (DE); HABISREITINGER, Uwe, 72250 Freudenstadt/Dietersweiler (DE); KREVET, Andreas, 71139 Ehningen (DE); MÜLLER, Matthias, 72213 Altensteig (DE); STARK, Thomas, 72074 Tübingen (DE); WIRTH, Konrad, 75233 Tiefenbronn (DE); ZÜRN, Michael, 71065 Sindelfingen (DE)
(74) Vertreter: JENSEN & SON
(86) Internationale Anmeldenummer: PCT/EP2011/005455
(87) Internationale Veröffentlichungsnummer: WO 2012/084087

(56) Entgegenhaltungen:
- EP-A1- 0 240 470
- EP-A1- 1 454 817
- EP-A2- 0 278 479
- WO-A1-02/055364
- WO-A2-03/054500
- DE-A1-102004 038 487
- JP-A- H07 257 452
- US-A- 4 033 033
- US-A- 4 257 158
- US-A- 5 090 105
- US-A1- 2009 230 665
- US-B1- 7 766 388

## Beschreibung

Die Erfindung betrifft ein Verfahren zum Montieren von Kraftwagen gemäß dem Oberbegriff des Patentanspruchs 1.

Aus dem Serienfahrzeugbau von Personenkraftwagen ist es allgemein bekannt, im Anschluss an die Rohbaufertigung und die anschließende Lackierung der jeweiligen Rohbau-Karosserien diese in einer Hauptmontagelinie der Endmontage mit einem jeweiligen Inneneinbau auszustatten. Die Karosserien werden dabei mittels entsprechender Förder- und Transporttechnik durch die Hauptmontagelinie geführt. Dabei werden beispielsweise als große Module die Instrumententafel, die Sitzanlagen, die Mittelkonsole, die Pedalerie, die Lenksäule und die Innenraumverkleidung montiert. Parallel zur Endmontage des Inneneinbaus in der Hauptmontagelinie findet üblicherweise eine Vormontage des Fahrwerks und des Antriebsstrangs statt, wobei diese Komponenten üblicherweise auf einer separaten Fördertechnik montiert und transportiert werden. Nachdem der jeweilige Rohbau des Personenkraftwagens in der Hauptmontagelinie bzw. Endmontage mit dem Inneneinbau ausgestattet ist, findet heute üblicherweise die so genannte Hochzeit statt, bei welcher der Rohbau des Kraftwagens mit den auf der separaten Fördertechnik angeordneten zugehörigen Fahrwerk und Antriebsstrang verbunden wird. Erst nach Ende des Durchlaufs durch die Hauptmontagelinie wird dann der jeweilige Kraftwagen mit Fahrzeugrädern ausgestattet.

Aus der EP 0 278 479 A2 ist ein modular aufgebauter Personenkraftwagen bekannt, der aus einem Front-, einem Mittel- und einem Hintermodul besteht. Diese werden entlang separater Montagelinien komplett vormontiert. Das Hintermodul hat dabei einen Hinterrahmen mit daran vormontierten Rädern. Dieses Modul wird vorgefertigt und dann mit den anderen Modulen zu einem PKW verbunden.

Die DE 10 2004 038 487 A1 zeigt einen modular aufgebauten Fahrzeugrahmen eines Lastkraftwagens. An dessen Frontmodul sind diverse Anbauteile bereits vormontiert. Es ist so gestaltet, dass es komplett vormontiert und anschließend mit dem Hauptrahmen, der die Fahrzeugräder trägt, verbunden werden kann. Ein ähnliches Konzept mit einem rahmenartigen Frontmodul mit daran vormontierten Rädern zeigt die US 2009/0230665 A1.

Weiterhin ist in der US 4,527,158 A eine Montagelinie zum Montieren von Bussen gezeigt. Dort wird ein selbsttragendes Unterbodenmodul in Rahmenbauweise mit daran vormontierten Rädern nach der Vormontage mit einem nichttragenden Aufbau des Busses verbunden.

Ein ähnliches Konzept mit einem selbsttragenden Unterbodenmodul und daran montierten Rädern für Personenkraftwagen zeigt die WO 02/055364 A1. Die EP 0240 470 A1 zeigt ein ganz ähnliches Unterbodenmodul.

Die EP 1 454 817 A1 zeigt ein Fahrzeug mit einem Hilfsrahmen, welcher den Motor und die Federung des Fahrzeugs, welche auch die Radnaben für die Vorderräder beinhaltet, trägt und mit diesen Teilen gemeinsam mit der Karosserie verbunden wird.

Darüber hinaus ist in der Wo 03/054500 A2 ein Rädermodul für ein Kraftfahrzeug offenbart, welches separat in einer eigenen Montagelinie vormontiert und dann am Fahrzeug befestigt wird.

Die US 5 090 105 A wiederum zeigt ein Montagekonzept für ein Kraftfahrzeug, bei dem ein nichttragender Karosserie-Oberbau auf einen selbsttragenden Unterbau aufgesetzt wird, welcher bereits Antriebskomponenten sowie Räder enthält.

Die JP H07 257452 A zeigt ausserdem ein Verfahren zum Montieren von Personenkraftwagen mit einem selbsttragenden Rohbau, bei welchem der jeweilige Rohbau des Kraftwagens mit einem zugehörigen Fahrwerk ausgestattet wird, wobei das Fahrwerk zumindest vor Erreichen eines Endes einer Hauptmontagelinie mit Fahrzeugrädernausgestattet wird.

Da sowohl der Rohbau zur Ausstattung mit dem Inneneinbau mittels entsprechender Förder- und Transporttechnik durch die Hauptmontagelinie geführt werden muss, wie auch das Fahrwerk und der Antriebsstrang durch ihre jeweilige Vormontage, ergibt sich insgesamt beim Montieren des Kraftwagens ein erheblicher Aufwand an Förder- und Transporttechnik. Dies bedingt nicht nur hohe Investitionskosten, sondern darüber hinaus einen hohen Platzbedarf in den Montagehallen. Darüber hinaus wird die Montage durch die bestehende Förder- und Transporttechnik relativ unflexibel.

Aufgabe der vorliegenden Erfindung ist es daher, ein Verfahren zum Montieren von Kraftwagen der eingangs genannten Art zu schaffen, mittels welchem sich der Aufwand an Förder- und Transporttechnik erheblich reduzieren lässt.

Diese Aufgabe wird erfindungsgemäß durch ein Verfahren zum Montieren von Kraftwagen mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen angegeben.

Um ein Verfahren der eingangs genannten Art zu schaffen, mittels welchem sich insbesondere der Aufwand an Förder- und Transporttechnik erheblich reduzieren lässt, ist es erfindungsgemäß vorgesehen, dass das Fahrwerk zumindest vor Erreichen eines Endes einer Hauptmontagelinie mit Fahrzeugrädern ausgestattet wird. Dabei wird der Kraftwagen nach der Ausstattung des Fahrwerks mit den Fahrzeugrädern vollständig autonom durch seinen eigenen Antrieb bewegt wird.

Mit anderen Worten ist es somit erfindungsgemäß vorgesehen, den Kraftwagen zu einem weitaus früheren Zeitpunkt als bislang üblich (nach der Hauptmontagelinie) mit Fahrzeugrädern zu versehen, um somit zumindest einen Teil der Förder- und Transporttechnik einzusparen, welche zum Aufnehmen des Gewichts des Kraftwagens und gegebenenfalls zum Fortbewegen des Kraftwagens erforderlich ist. Da der Kraftwagen somit nach der Montage der Fahrzeugräder selbsttätig sein Gewicht tragen und zumindest rollen kann, ist zumindest eine Aufnahme des Gewichts des Kraftwagens im weiteren Ablauf in der Hauptmontagelinie nicht mehr erforderlich. Dies ermöglicht nicht nur eine erhebliche Einsparung an Förder- und Transporttechnik mit den damit verbundenen Folgewirkungen, sondern darüber hinaus ergibt sich auch eine weitaus flexiblere Montage. So ist es beispielsweise möglich, auf sehr flexible Weise eine Auspufferung von Kraftwagen zu einem frühen Zeitpunkt vorzunehmen und diese gegebenenfalls zwischenzulagern, bevor die weitere Montage erfolgen soll. Hierzu ist lediglich ein entsprechender Abstellraum erforderlich.

Dabei wird der Kraftwagen alternativ fremdkraftbetätigt oder erfindungsgemäß durch seinen eigenen Antrieb nach dem Montieren der Fahrzeugräder bewegt. Unter fremdkraftbetätigt ist dabei zu verstehen, dass der Kraftwagen - beispielsweise mit Hilfe eines Fahrerlosen Transportsystems (FTS) - unter Zuhilfenahme einer fremden Kraft vorwärts bewegt wird, jedoch auf seinen eigenen Rädern rollt. Somit kann zumindest auf Förder- und Transporttechnik verzichtet werden, welche einen erheblichen Teil des Gewichts des Kraftwagens aufnehmen muss.

Erfindungsgemäß hierzu ist es auch denkbar, dass der Kraftwagen durch seinen eigenen Antrieb bewegt wird. Hierzu ist es dann allerdings erforderlich, dass der Antrieb des Kraftwagens bereits betriebsbereit gemacht wird. Bei einem Elektroantrieb muss dir Verkabelung zur fahrzeugeigenen Batterie und zur Lenkung bzw. zum jeweiligen Steuergerät hergestellt werden. Bei einer Verbrennungskraftmaschine kann ein FTS für den Transport durch die Hauptlinie zum Einsatz kommen. Auch ist ein Entfall verbindender Fördertechnik möglich, so dass eine vollständig autonome Fahrzeugbewegung gegeben ist.

Eine bevorzugte Ausführungsform sieht dabei vor, dass das Fahrwerk zumindest vor der Hauptmontagelinie mit den Fahrzeugrädern ausgestattet wird, und zwar vorzugsweise im unmittelbaren oder baldigen Anschluss an eine Verbindung des Fahrwerks mit dem Rohbau, welches üblicherweise im Rahmen einer so genannten Hochzeit passiert. Dies geschieht vorzugsweise, bevor der Rohbau mit der Innenausstattung versehen wird, so dass der Kraftwagen vorzugsweise während des gesamten Durchlaufs durch die Hauptmontagelinie, in welchem dieser mit dem Inneneinbau versehen wird, auf eigenen Rädern rollen kann.

Schließlich hat es sich als vorteilhaft gezeigt, wenn die Bewegung des Kraftwagens auf den Fahrzeugrädern über eine Steuerungseinrichtung der Montagelinie, insbesondere der Hauptmontagelinie, erfolgt. Somit kann der Kraftwagen über externe Steuerungssignale an den Fluss der Montagelinie angepasst werden.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische Perspektivansicht auf eine Montagelinie zur Vormontage eines jeweiligen Fahrwerks und eines jeweiligen Antriebsstrangs des entsprechenden Kraftwagens sowie eines Bodenmoduls des jeweiligen Kraftwagens, welche miteinander im Rahmen einer so genannten Verlobung verbunden und vormontiert werden, bevor diese mit einem jeweilig zugehörigen Rohbau des entsprechenden Kraftwagens im Rahmen einer so genannten Hochzeit verbunden werden, wobei im Anschluss an die Hochzeit der Kraftwagen mit Rädern bestückt wird;
- Fig. 2: eine schematische Perspektivansicht auf die Vormontage des Antriebsstrangs und des Fahrwerks innerhalb der in Fig. 1 gezeigten Montagelinie;
- Fig. 3: eine schematische Perspektivansicht auf eine Vormontage des Bodenmoduls innerhalb der Montagelinie gemäß Fig. 1;
- Fig. 4: eine schematische Perspektivansicht auf die Verlobung des Fahrwerks und des Antriebsstrangs mit dem jeweils zugehörigen Bodenmodul innerhalb der Montagelinie gemäß Fig. 1;
- Fig. 5: eine schematische Perspektivansicht auf die Hochzeit des jeweiligen Rohbaus des Kraftwagens mit dem zugehörigen Fahrwerk und Antriebsstrang beziehungsweise dem zugehörigen Bodenmodul innerhalb der Montagelinie gemäß Fig. 1;
- Fig. 6: eine schematische Perspektivansicht auf eine Montagestation der Montagelinie gemäß Fig. 1 nach der Hochzeit, innerhalb welcher die Bestückung des Kraftwagens mit den Fahrzeugrädern erfolgt;
- Fig. 7: eine schematische Perspektivansicht auf Montagestationen einer der Montagelinie gemäß Fig. 1 nachgeschalteten Hauptmontagelinie, in welcher der jeweilige Rohbau des Kraftwagens mit dem Inneneinbau ausgestattet wird;
- Fig. 8: eine weitere ausschnittsweise Perspektivansicht auf jeweilige Montagestationen der Hauptmontagelinie, innerhalb welchen jeweilige Baueinheiten und Komponenten des Inneneinbaus zur Montage bereitgestellt sind; und in
- Fig. 9: eine Perspektivansicht auf den mit dem Fahrwerk, dem Antriebsstrang und dem Inneneinbau versehenen jeweiligen Rohbau des Kraftwagens, welcher im Anschluss an den Inneneinbau mit die Außenhaut bildenden Elementen versehen wird.

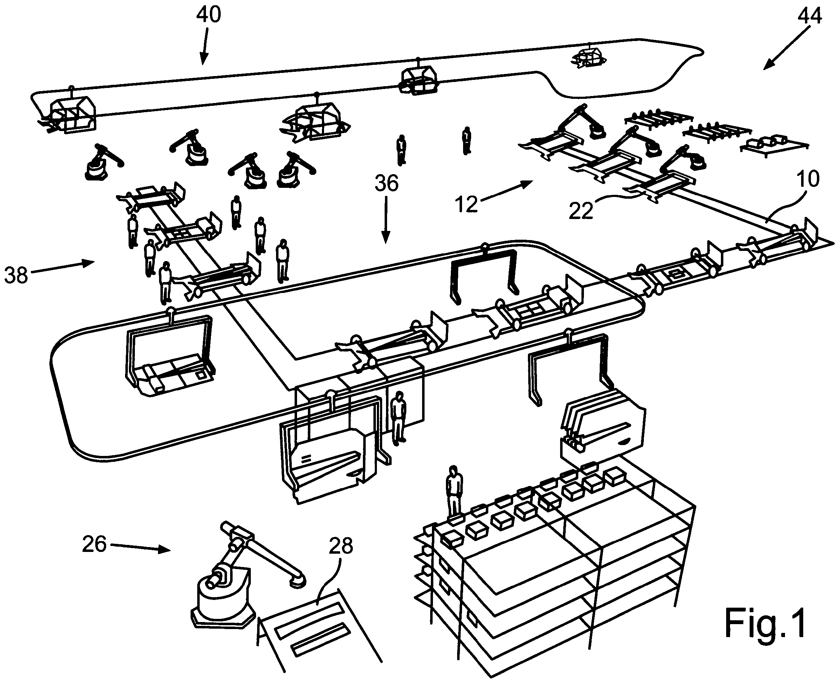

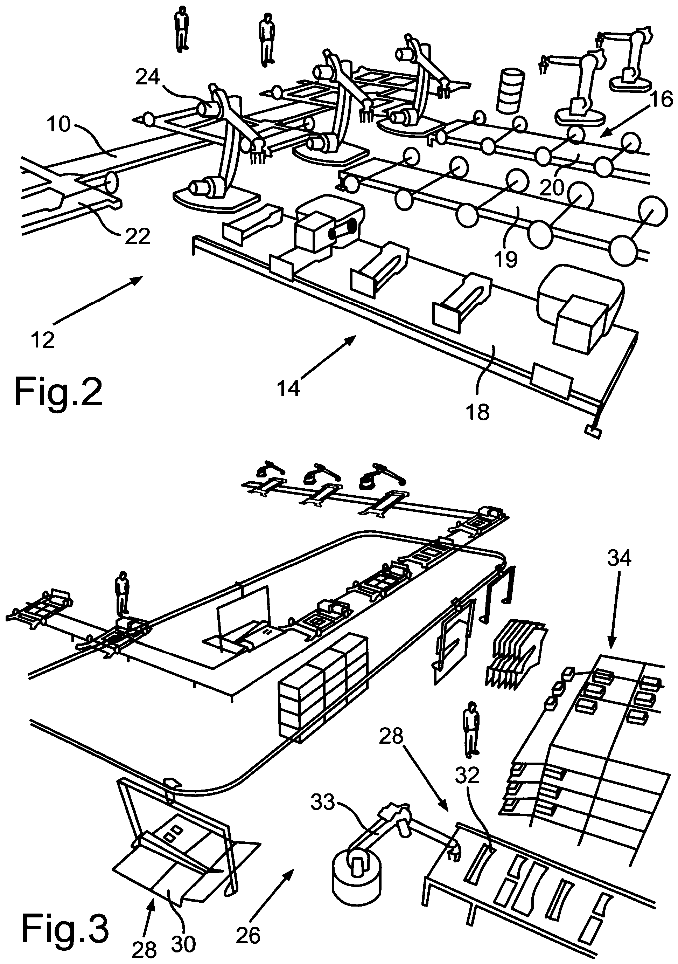

In Fig. 1 ist in einer schematischen Perspektivansicht eine einer im Weiteren noch näher erläuterten Hauptmontagelinie vorgelagerte Montagelinie zum Montieren von Kraftwagen dargestellt. Diese Montagelinie 10 soll im Weiteren in Zusammenschau mit den Fig. 2 bis 6 detailliert erläutert werden.

In Zusammenschau mit Fig. 2 ist zunächst ein erster Bereich 12 der Montagelinie 10 erkennbar, welcher die Vormontage eines jeweiligen Antriebsstrangs 14 und eines jeweiligen Fahrwerks 16 des entsprechenden Kraftwagens zeigt. Dabei zeigt Fig. 2 den bereich 12 in einer schematischen und ausschnittsweisen Perspektivansicht.

Wie aus Fig. 2 erkennbar ist, umfasst der Bereich 12 der Montagelinie 10 eine Bereitstellungseinrichtung 18 für einen jeweils unterschiedlichen Antrieb beziehungsweise Antriebsstrang 14, welcher in Abhängigkeit des jeweiligen Antriebskonzeptes des Kraftwagens bereitgestellt wird. Hinter der Bereitstellungseinrichtung 18 für den jeweiligen Antrieb beziehungsweise Antriebsstrang 14 sind jeweilige Bereitstellungseinrichtungen 19, 20 für eine Vorderachse beziehungsweise Hinterachse des jeweiligen Fahrwerks 16 erkennbar. Neben der Vorder- und Hinterachse können darüber hinaus weitere Fahrwerksglieder oder Komponenten bereitgestellt werden.

Wie nun aus Fig. 2 erkennbar ist, werden die einzelnen Komponenten des Antriebsstrangs 14 und des Fahrwerks 16 auf einem jeweiligen Hilfsträger 22, der auf der Montagelinie 10 befördert wird, angeordnet. Dies erfolgt mittels entsprechender Roboter 24.

Die jeweiligen Komponenten des Antriebsstrangs 14 und des Fahrwerks 16 werden auf den Bereitstellungseinrichtungen 18 bis 20 sequenziert bereitgestellt und auf dem jeweiligen Hilfsträger 22, welcher einem entsprechend zu fertigenden Kraftwagens zugeordnet ist, positioniert. Die sequenzierte Anordnung und Auswahl der einzelnen Komponenten des Antriebsstrangs 14 und des Fahrwerks 16 erfolgen dabei in Abhängigkeit eines jeweiligen Antriebskonzeptes des Kraftwagens.

In Zusammenschau mit Fig. 3, die in einer weiteren ausschnittsweisen und schematischen Perspektivansicht insbesondere einen zweiten Bereich 26 der Montagelinie 10 erkennen lässt, wird die Vormontage eines Bodenmoduls 28 deutlich. Dieses Bodenmodul 28 umfasst einen Bodenrohbau 30, an welchem als Ausstattung eine Mehrzahl von Baueinheiten 32 anordnenbar sind. Diese Baueinheiten 32 sind variantenspezifisch beziehungsweise variantenabhängig von dem jeweiligen Antriebskonzept des entsprechenden Kraftwagens. Als Baueinheiten 32 können dabei sowohl einzelne Bauteile beziehungsweise Bauelemente verstanden werden wie auch Zusammenbauten oder Baugruppen. Beispielsweise ist es denkbar, den Bodenrohbau 30 mit Hitzeschildern, hydraulischen Leitungen oder Kraftstoffleitungen ebenso zu versehen wie mit Luftleitungen oder dergleichen. Ebenfalls ist es denkbar, den Bodenrohbau 30 mit einem entsprechenden antriebskonzeptbedingten Energiespeichern, beispielsweise einem Tank, einer Batterie oder dergleichen, zu versehen. Auch entsprechende Steuergeräte, welche in Abhängigkeit des entsprechenden Antriebskonzeptes des Kraftwagens gebraucht werden, können an dem Bodenrohbau 30 angebracht sein. Elektrische Baueinheiten 32 wie beispielsweise Kabelbäume, insbesondere der Hauptkabelbaum können ebenfalls an dem Bodenrohbau 30 befestigt sein, um hierdurch das Bodenmodul 28 zu komplettieren.

Die einzelnen Baueinheiten 32 werden dabei beispielsweise mittels eines Roboters 33 an dem Bodenrohbau 30 angebracht. Vorliegend ist es symbolhaft ein Regal 34 dargestellt, an welchem die Baueinheiten 32 beispielsweise sequenziert bereitgestellt sind.

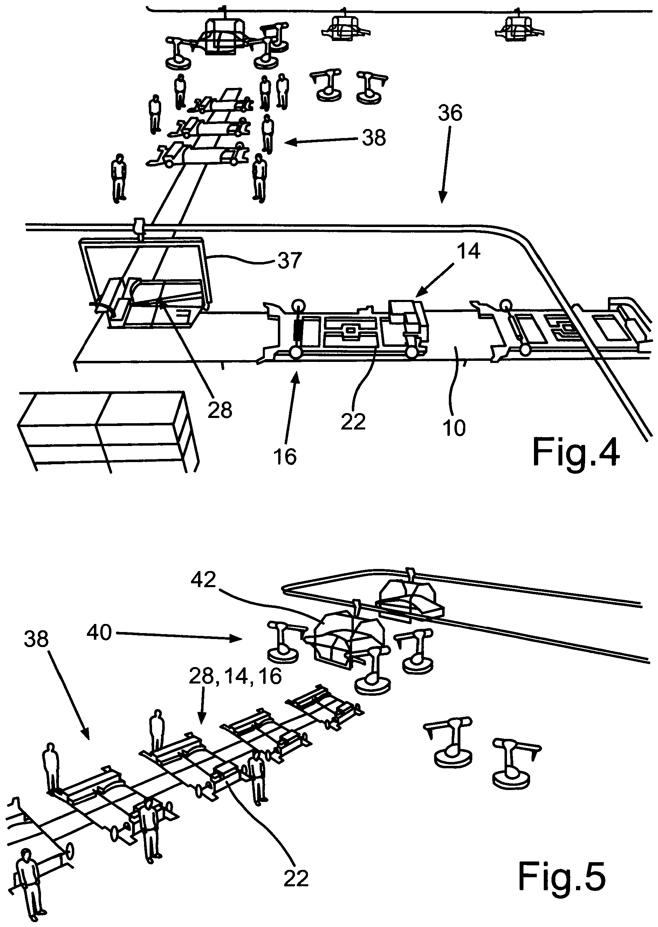

In Zusammenschau mit Fig. 4 ist in einer ausschnittsweisen und schematischen Perspektivansicht ein dritter Bereich 36 der Montagelinie 10 dargestellt. In diesem dritten Bereich erfolgt eine so genannte Verlobung des im ersten Bereich 12 vormontierten Antriebsstrangs 14 beziehungsweise Fahrwerks 16 und des im zweiten Bereich 26 vormontierten Bodenmoduls 28. Dabei ist erkennbar, dass der den Antriebsstrang 14 und das Fahrwerk 16 tragende Hilfsträger 22 von unten herangeführt und oberseitig über eine entsprechende Transporteinrichtung 37 das Bodenmodul 28 von oben her aufgesetzt wird. Durch die Verlobung entsteht somit eine vormontierte Anordnung von Antriebsstrang 14, Fahrwerk 16 und Bodenmodul 28, welche auf die jeweilige Variante des Kraftwagens beziehungsweise auf das jeweilige Antriebskonzept des Kraftwagens abgestimmt ist.

In Fig. 4 sind außerdem weitere Montagestationen 38 erkennbar, innerhalb welchen beispielsweise eine Verbindung der entsprechenden Komponenten und Baueinheiten 32 des Antriebsstrangs 14, des Fahrwerks 16 und des Bodenmoduls 28 erfolgen kann. Neben dem Verbinden der einzelnen Komponenten und Baueinheiten 32 können beispielsweise Leitungen oder Energiespeicher wie Tanks befüllt werden. Außerdem können beispielsweise elektrische Steuergeräte aktiviert werden. Nach der Verlobung sind die einzelnen Komponenten beziehungsweise Baueinheiten 32 somit vorzugsweise betriebsbereit.

In Fig. 5 ist ein vierter Bereich 40 der Montagelinie 10 erkennbar, in welchem ein jeweiliger Rohbau 42 im Rahmen einer so genannten Hochzeit mit seinem jeweils zugehörigen Antriebsstrang 14, Fahrwerk 16 und Bodenmodul 28, die zuvor im dritten Bereich 36 im Rahmen der Verlobung miteinander vereinigt worden sind, verbunden wird. Der Rohbau 42 weist hierzu eine entsprechende Ausnehmung für das Bodenmodul 28 auf, welches entsprechend angesetzt wird. Der Antriebsstrang 14 und das Fahrwerk 16 sowie das Bodenmodul 28 werden ebenfalls mit dem Rohbau 42 des Kraftwagens verbunden. Nach der Verbindung mit dem Rohbau 42 kann der Hilfsträger 22, welcher zum Tragen des Antriebsstrangs 14, des Fahrwerks 16 und des Bodenmoduls 28 gedient hat, wieder in den ersten Bereich 12 zurückgeführt werden. An dieser Stelle sei angemerkt, dass es sich beim vorliegenden Rohbau 42 um eine selbst tragende Karosserie eines Personenkraftwagens bzw. um einen selbst tragenden Aufbau eines Kraftwagens allgemein handelt.

Da - wie bereits erläutert - die jeweilige Variante des Antriebskonzepts durch entsprechende Ausbildung des Antriebsstrangs 14, des Fahrwerks 16 und des Bodenmoduls 28 erfolgt, ist der Rohbau 42 im Wesentlichen variantenfrei gestaltet. Dies bedeutet, dass die infolge des Antriebskonzeptes erforderliche Variation zumindest im Wesentlichen in die Vormontage des Antriebsstrangs 14, des Fahrwerks 16 und des Bodenmoduls 28 vorverlagert wird.

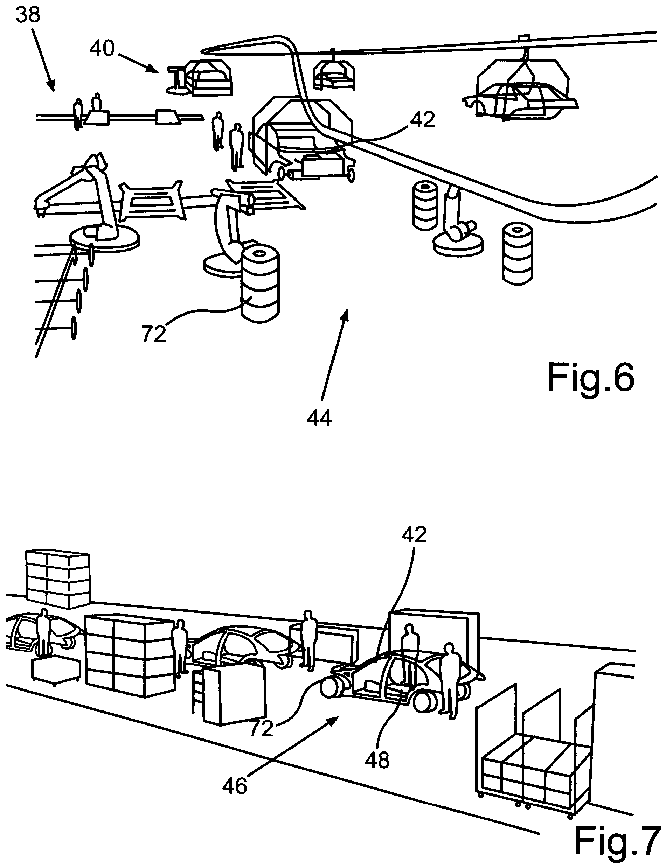

In Fig. 6 ist eine weitere Montagestation 44 der Montagelinie 10 im unmittelbaren Anschluss an die Hochzeit gezeigt, in welcher das Fahrwerk 16 des Kraftwagens mit Fahrzeugrädern 72 versehen wird. Unmittelbar oder im nahen Anschluss an die Hochzeit zwischen dem Antriebsstrang 14 und dem Fahrwerk 16 mit dem Rohbau 42 wird somit erreicht, dass das Gewicht des Fahrzeugs nicht länger durch Förder- und Transporteinrichtungen aufgenommen werden muss. Vielmehr kann der Kraftwagen nunmehr auf den eigenen Fahrzeugrädern 72 rollen.

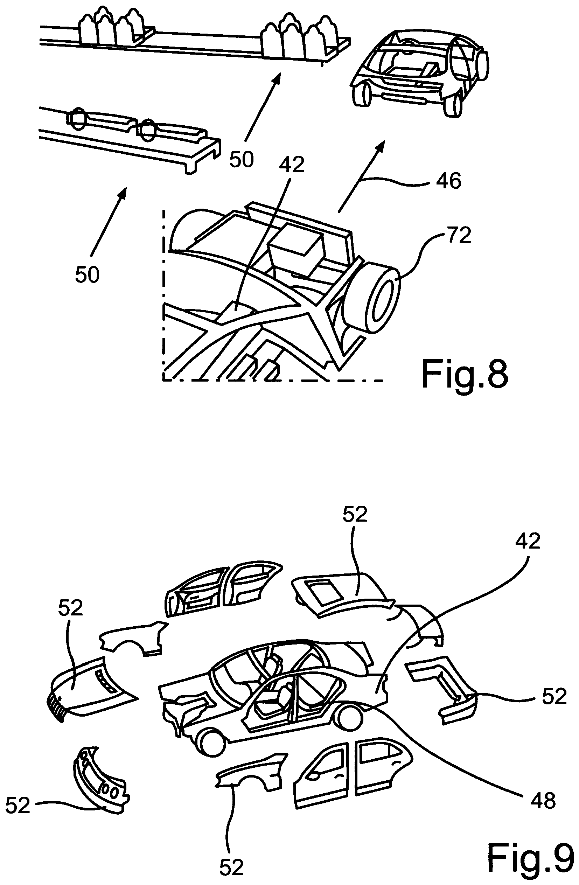

Die Fig. 7 und 8 zeigen jeweilige Perspektivansichten einer Hauptmontagelinie 46, welche sich an die Montagelinie 10 anschließt. Es ist erkennbar, dass die jeweiligen Kraftwagen hierzu auf ihren Fahrzeugrädern 72 stehen. Im Unterschied zum bisherigen Montageverfahren findet dabei erst im Anschluss an die Hochzeit die Ausstattung des Rohbaus 42 mit einem Inneneinbau 48 statt. Dieser Inneneinbau 48 umfasst insbesondere den Einbau der Instrumententafel, der Sitzanlagen, der Innenraumverkleidungen, der Mittelkonsole sowie einer Mehrzahl von weiteren Einrichtungen wie beispielsweise der Pedalerie, der Lenksäule oder anderer weiterer Ausstattungen. Hierzu zeigt Fig. 8 jeweilige Montagestationen 50, bei welchen beispielsweise entsprechend zugehörige Sitzanlagen oder Instrumententafeln montiert werden. Fig. 7 zeigt darüber hinaus, dass beispielsweise die Verscheibung des Rohbaus 42 in der Hauptmontagelinie 46 erfolgen kann.

Schließlich zeigt Fig. 9 den Rohbau 42 des Kraftwagens in einer schematischen Perspektivansicht, bei welchem der Inneneinbau 48 bereits vorgenommen worden ist. Es ist erkennbar, dass neben dem Inneneinbau 48 auch die Frontscheibe und die Heckscheibe eingepasst worden sind.

In einem weiteren Verfahrensprozess innerhalb der Hauptmontagelinie wird der Rohbau 42 des Kraftwagens nach der Ausstattung mit dem Inneneinbau 48 mit einer Mehrzahl von Elementen 52 versehen, welche die Außenhaut des Kraftwagens bilden. Diese Elemente können nicht nur bewegliche Türen oder Hauben beziehungsweise Klappen, sondern auch andere Außenbeplankungsteile wie Kotflügel, Dachmodule, Frontend- und Heckmodule oder andere Außenanbauteile sein. Dabei ist der Kraftwagen vorzugsweise so ausgebildet, dass der gesamte Rohbau 42 mit entsprechenden außenbeplankenden Elementen 52 kaschiert wird. Dies hat nämlich den Vorteil, dass somit der Rohbau 42, bevor dieser zur Hochzeit angeliefert wird, lediglich mit einem Korrosionsschutz versehen werden muss, nicht jedoch mit einer Lackierung. Diese kann nämlich eingespart werden, da sämtliche Bereiche keine Sichtteile sind, sondern durch die außenbeplankenden Elemente 52 überdeckt werden.

Die Einstellung von Funktionselementen des Kraftwagens kann bevorzugter Weise bereits innerhalb der Hauptmontagelinie 46 vorgenommen werden, und zwar insbesondere deshalb, um die Umfänge im Bereich des Endes der Hauptmontagelinie 46 zu verringern. So kann beispielsweise eine Fahrwerkseinstellung, eine Scheinwerfereinstellung oder eine Kalibrierung und Inbetriebnahme von Fahrerassistenzsystemen, insbesondere auch Fahrwerksassistenzsystemen, von der Montagehauptlinie 44 bereits in die Vormontage verlagert werden. Beispielsweise können somit entsprechende Einstellungen von Funktionselementen im Anschluss an die Verlobung beziehungsweise vor oder nach der Hochzeit im Bereich der Vormontage und vor der Hauptmontagelinie 46 geprüft werden. Ebenso ist es durch die Möglichkeit zum autonomen Bewegen des Kraftwagens möglich, dass dieser auf entsprechende Rollenprüfstände oder in Bereiche zur Regenprobe bewegt wird.

Insgesamt ist somit erkennbar, dass die einzelnen Kraftwagen nach der Montage der Fahrzeugräder 72 zumindest insoweit autonom bewegt werden können, als ihr Fahrzeuggewicht nicht mehr durch externe Transport- und Fördereinrichtungen aufgenommen werden muss. Da der jeweilige Kraftwagen bereits unmittelbar nach Ende der Hochzeit zwischen dem Fahrwerk 16 und dem Rohbau 42 mit den Fahrzeugrädern 72 ausgestattet wird, kann dieser entlang der kompletten Hauptmontagelinie 46 beziehungsweise während der Montage des zumindest annähernd kompletten Inneneinbaus 48 auf eigenen Fahrzeugrädern 72 bewegt werden.

Dabei ist es prinzipiell denkbar, dass die fahrzeugeigenen Systeme bereits insoweit aktiviert werden, dass ein selbstständiges Beschleunigen, Verzögern oder Lenken des Kraftwagens möglich ist. Alternativ hierzu wäre es jedoch auch denkbar, zumindest insoweit Förder- und Transportanlagen einzusetzen, als diese zur Bereitstellung einer fremden Antriebskraft zur Fortbewegung des jeweiligen Kraftwagens dienen. So wäre es beispielsweise denkbar, die Kraftwagen auf ihren eigenen Fahrzeugrädern 72, mit Hilfe eines FTS zu bewegen.

Die Bewegung des Kraftwagens auf den Fahrzeugrädern 72 erfolgt dabei beispielsweise über eine Steuerungseinrichtung, wobei neben Steuerungssignalen gegebenenfalls auch elektrischer Strom bereitgestellt werden kann.

Die Aufnahme des Fahrzeuggewichts für die jeweiligen eigenen Fahrzeugräder 72 ergibt dabei nicht nur eine Einsparung an Förder- und Transporttechnik, sondern darüber hinaus kann auch die Montage insgesamt flexibler gestaltet werden. Beispielsweise ist es denkbar, einzelne Kraftwagen auszupuffern und somit eine flexiblere Montage zu ermöglichen. Hierzu ist lediglich ein entsprechender Raum zur Unterbringung der Fahrzeuge notwendig.

Durch die Bewegung des Kraftwagens auf den eigenen Fahrzeugrädern ist es weiterhin sehr einfach möglich, ein Fahrzeug aus der Montage auszuschleusen. Dies kann beispielsweise ferngesteuert über ein Handbediengerät erfolgen.

Weiterhin ist es durch die Bewegung des Kraftwagens auf den Fahrzeugrädern 72 sehr einfach möglich, das Fahrzeug in eine erhöhte Position zu bringen, so dass Montagearbeiten im unteren Bereich des Fahrzeugs, beispielsweise am Unterboden durchgeführt werden können. Dazu muss nur eine Rampe oder etwas Ähnliches in der Montagelinie vorgesehen werden, auf die sich die Kraftwagen selbstständig hinaufbewegen können, ohne dass eine aufwändige Hebeeinrichtung zum Anheben der Karosserie in der Fördertechnik vorgesehen werden muss. Alternativ ist es sehr einfach möglich, einzelne Fahrzeuge über eine Grube zu bewegen, um Montagearbeiten am Unterboden durchzuführen. Durch diese beiden einfach zu realisierenden Maßnahmen wird die Ergonomie für den Werker deutlich verbessert.

## Patentansprüche

1. Verfahren zum Montieren von Personenkraftwagen mit einem selbsttragenden Rohbau (42), bei welchem der jeweilige Rohbau (42) des Kraftwagens mit einem zugehörigen Fahrwerk (16) ausgestattet wird, wobei das Fahrwerk (16) zumindest vor Erreichen eines Endes einer Hauptmontagelinie (46) mit Fahrzeugrädern (72) ausgestattet wird,
**dadurch gekennzeichnet, dass**
der Kraftwagen nach der Ausstattung des Fahrwerks (16) mit den Fahrzeugrädern (72) vollständig autonom durch seinen eigenen Antrieb bewegt wird.

2. Verfahren nach Anspruch 1,
**dadurch gekennzeichnet, dass**
das Fahrwerk (16) zumindest vor der Hauptmontagelinie (46) mit den Fahrzeugrädern (72) ausgestattet wird.

3. Verfahren nach Anspruch 2,
**dadurch gekennzeichnet, dass**
das Fahrwerk (16) im Anschluss an die Anordnung des Fahrwerks (16) an dem Rohbau (42) des Kraftwagens mit den Fahrzeugrädern (72) ausgestattet wird.

4. Verfahren nach einem der vorhergehenden Ansprüche,
**dadurch gekennzeichnet, dass**
das Fahrwerk (16) vor der Ausstattung des Rohbaus (42) des Kraftwagens mit einem zugehörigen Inneneinbau (48) mit den Fahrzeugrädern (72) versehen wird.

5. Verfahren nach einem der vorhergehenden Ansprüche,
**dadurch gekennzeichnet, dass**
die Bewegung des Kraftwagens auf den Fahrzeugrädern (72) über eine Steuerungseinrichtung der Montagelinie, insbesondere der Hauptmontagelinie (46), erfolgt.

## Claims

1. Method for assembling a passenger car with a self-supporting body-in-white (42), in which the respective body-in-white (42) of the motor vehicle is equipped with an associated chassis (16), wherein the chassis (16) is equipped with vehicle wheels (72) at least before reaching an end of a main assembly line (46),
**characterised in that**
after the chassis (16) has been equipped with the vehicle wheels (72), the motor vehicle is moved completely autonomously by its own drive.

2. Method according to claim 1,
**characterised in that**
the chassis (16) is equipped with the vehicle wheels (72) at least in front of the main assembly line (46).

3. Method according to claim 2,
**characterised in that**
the chassis (16) is equipped with vehicle wheels (72) following the arrangement of the chassis (16) at the body-in-white (42).

4. Method according to any of the preceding claims,
**characterised in that**
the chassis (16) is equipped with vehicle wheels (72) before the body-in-white (42) of the motor vehicle is provided with an associated interior installation (48).

5. Method according to any of the preceding claims,
**characterised in that**
the motor vehicle is moved on the vehicle wheels (72) by way of a control device of the assembly line, in particular of the main assembly line (46).

## Revendications

1. Procédé de montage de véhicule automobile de tourisme doté d'une caisse brute autoportante (42), selon lequel la caisse brute respective (42) du véhicule automobile est équipée d'un châssis correspondant (16), le châssis (18) étant équipé de roues (72) avant que le véhicule n'atteigne la fin d'une ligne de montage principale (46),
**caractérisé en ce que** le véhicule automobile est déplacé après que le véhicule automobile (16) a été équipé de roues (72) de manière entièrement autonome par son propre entraînement.

2. Procédé selon la revendication 1, **caractérisé en ce que** le châssis (16) est équipé des roues (72) au moins avant la ligne de montage principale (46).

3. Procédé selon la revendication 2, **caractérisé en ce que** le châssis (16) est équipé des roues (72) sur la caisse brute (42) du véhicule automobile à la suite de la mise en place du châssis (16).

4. Procédé selon l'une quelconque des revendications précédentes, **caractérisé en ce que** le châssis (16) est pourvu des roues (72) avant que la caisse brute (42) du véhicule automobile ne soit pourvue d'une installation intérieure correspondante (48).

5. Procédé selon l'une quelconque des revendications précédentes, **caractérisé en ce que** le mouvement du véhicule automobile sur les roues (72) s'effectue par l'intermédiaire d'un dispositif de commande de la ligne de montage, en particulier la ligne de montage principale (46).
